# EUROPEAN PATENT APPLICATION

(11) **EP 1 063 413 A2**
(43) Date of publication of application: **27.12.2000**
(21) Application number: 00113516.9
(22) Date of filing: 26.06.2000
(51) Int. Cl.: F02M 35/108

(54) **Four-stroke cycle engine**

(30) Priority: 25.06.1999 JP 18011099
(71) Applicant: YAMAHA HATSUDOKI KABUSHIKI KAISHA, Iwata-shi Shizuoka-ken (JP)
(72) Inventor: Kawamura, Makoto, Iwata-Shi, Shizuoka-ken (JP); Baba, Motoshi, Iwata-Shi, Shizuoka-ken (JP)
(74) Representative: Grünecker, Kinkeldey, Stockmair & Schwanhäusser Anwaltssozietät

(57) **Abstract**

A four-stroke cycle engine having intake ports openable to a combustion chamber in a cylinder head, said intake ports being connected to an intake manifold, said intake manifold being provided with a throttle valve for controlling the intake air flow rate, and having a sub-intake passage for connecting the upstream and downstream sides of said throttle valve; and a control valve disposed in said sub-intake passage for controlling the intake air flow rate. The downstream side ends of said sub-intake passage are open to said intake ports, and a check valve is disposed on the downstream side of said sub-intake passage from said control valve.

## Description

This invention relates to a four-stroke cycle engine having intake ports openable to a combustion chamber in a cylinder head, said intake ports being connected to an intake manifold, said intake manifold being provided with a throttle valve for controlling the intake air flow rate, and having a sub-intake passage for connecting the upstream and downstream sides of said throttle valve, and a control valve disposed in said sub-intake passage for controlling the intake air flow rate.

A four-stroke cycle engine has been used having an opening/closing intake air control valve in which, for example, notches are formed in the valve or one of four valves with separate ports are closed, to thereby generate swirling or tumbling of intake air for stable engine operation.

However, CO or HC emissions will increase in such a case, and especially in a turbo-engine because of slow temperature rise of its catalyst.

Therefore, if a sub-intake passage is provided connecting the upstream and downstream sides of the throttle valve, and the intake air flow rate in the sub-intake passage is controlled by a control valve, and further, air is drawn during idling, then CO or HC emissions are improved and stable engine operation is assured, but engine hunting due to pulsation of intake air may occur during deceleration and supercharged pressure may leak to the atmosphere especially in an engine with a turbocharger.

Therefore, it is an objective of this invention to provide a four-stroke cycle engine as indicated above capable of effecting an improvement of CO or HC emissions and stable engine operation, and of preventing engine hunting due to pulsation of intake air during deceleration and leakage of supercharged pressure to the atmosphere.

In order to solve the problem and to achieve the intended object, this invention is arranged as described in the following.

According to the present invention, this objective is solved for a four-stroke cycle engine as indicated above in that the downstream side ends of said sub-intake passage are open to said intake ports, and a check valve is disposed on the downstream side of said sub-intake passage from said control valve.

According to the invention, the downstream side ends of a sub-intake passage bypassing a throttle valve for air-intake are open to intake ports, so that intake air turbulence due to air induction during idling, especially during first idling after cold starting, facilitates mixture of air with fuel, providing stable combustion after cold starting. In addition, a check valve is disposed on the downstream side of the sub-intake passage from the control valve, so that the check valve allows for prevention of engine hunting due to pulsation of intake air during deceleration, and reduction of leakage of supercharged pressure.

The invention of claim 2 is characterized by the four-stroke cycle engine of the invention of claim 1, wherein an even number of and more than four cylinders are provided, said sub-intake passage downstream of said check valve is branched into a plurality of branch passages in a multistage fashion, and said branched passages are each open to intake ports in respective cylinders.

According to the invention of claim 2, uniformity of the intake airflow rate can be achieved for each cylinder, effecting stability of combustion.

The invention of claims 3 and 4 is characterized by the four-stroke cycle engine of the invention of claim 2, wherein in a cylinder head connection section of said intake manifold, first head side branch paths branched from said sub-intake passage downstream of said check valve, second head side branch paths branched further from said first head side branch paths, and delivery passages having downstream openings through which air is delivered from said second head side branch paths to intake ports of said cylinders, are formed integrally; and a lid having an intake air induction section connected to the downstream side of said sub-intake passage from said check valve, is attached to said cylinder head connection section.

According to the invention of claims 3 and 4, with a simple construction comprised of a cylinder head connection section and a lid, the sub-intake passage downstream of the check valve is branched in two stages and the branched passages can be open to intake ports in the respective cylinders.

The invention of claims 5 and 6 is characterized by the four-stroke cycle engine of the invention of claim 2, wherein in cylinder head connection sections of said intake manifold, delivery passages having downstream openings through which air is delivered to said intake ports, are formed integrally; a first branch pipe having an intake air induction section connected to the downstream side of said sub-intake passage from said check valve, and second branch pipes branched further from said first branch pipe, are provided; and lids having communication holes in communication with said delivery passages, are connected to said second branch pipes, said lids being attached to said cylinder head connection sections.

According to the invention of claims 5 and 6, with a simple construction comprised of cylinder head connection sections, a first branch pipe, second branch pipes and lids, the sub-intake passage downstream of the check valve is branched in two stages and the branched passages can be open to intake ports in the respective cylinders.

The invention of claim 7 is characterized by the four-stroke cycle engine of the invention of claim 2, wherein in cylinder head connection sections of said intake manifold, head side branch passages branched from said sub-intake passage downstream of said check valve, and delivery passages having downstream openings through which air is delivered from said head side branch passages to intake ports of said cylinders, are formed integrally; and a branch pipe having an intake air induction section connected to the downstream side of said sub-intake pipe from said check valve, is connected to lids having communication holes providing communication between said branch pipe and said head side branch passages, said lids being attached to said cylinder head connection sections.

According to the invention of claim 7, with a simple construction comprised of cylinder head connection sections, a branch pipe and lids, the sub-intake passage downstream of the check valve is branched in two stages and the branched passages can be open to intake ports in the respective cylinders.

Other preferred embodiments of the present invention are laid down in further dependent claims.

In the following, the present invention is explained in greater detail with respect to several embodiments thereof in conjunction with the accompanying drawings, wherein:
Fig. 1 is a partially broken-away front view of a four-stroke cycle engine with a turbocharger;
Fig. 2 is a schematic plan view showing the construction of the four-stroke cycle engine with turbocharger;
Fig. 3 is a schematic view showing the construction of another embodiment of the four-stroke cycle engine with turbocharger;
Fig. 4 is a front view of an intake manifold;
Fig. 5 is a partially broken-away side view of the intake manifold;
Fig. 6 is a plan view of a cylinder head connection section;
Fig. 7 is a side view of a lid;
Fig. 8 is a partially broken-away side view of an intake manifold;
Fig. 9 is a side view of branch piping;
Fig. 10 is a plan view of the branch piping;
Fig. 11 is a partially broken-away side view of an intake manifold; and
Fig. 12 is a sectional view along line XII-XII of Fig. 11.

Now, embodiments of a four-stroke cycle engine of this invention will be described below with reference to the accompanying drawings.

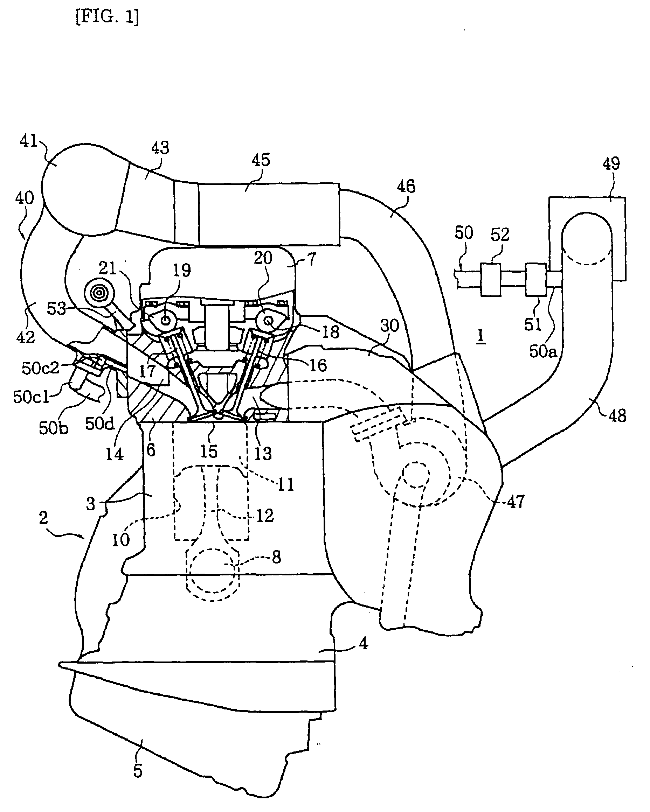

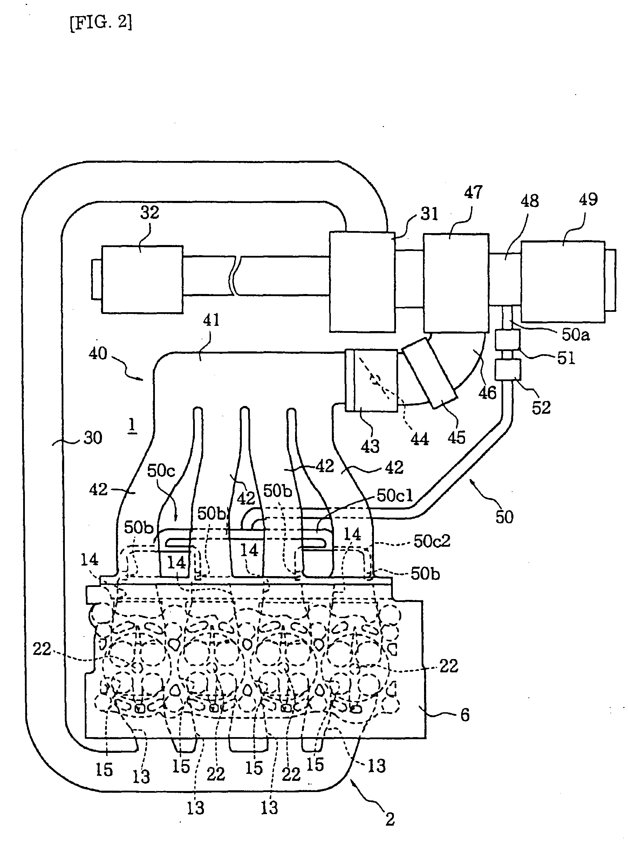

Fig. 1 is a partially broken-away front view of a four-stroke cycle engine with a turbocharger, and Fig. 2 is a schematic plan view showing the construction of the four-stroke cycle engine with turbocharger.

The four-stroke cycle engine 1 of this embodiment is, for example, of a four cylinder type, in which piston operation causes pulsation of the inside pressure of the crank case.

An engine body 2 of the four-stroke cycle engine 1 comprises a cylinder block 3, a crank case 4, an oil pan 5, a cylinder head 6 and a head cover 7. Between the cylinder block 3 and the crank case 4 is journaled a crank shaft 8, and within each cylinder bore 10 in the cylinder block 3 is disposed for reciprocal movement a piston 11, which is connected to the crank shaft 8 through a connecting rod 12.

In the cylinder head 6 are formed exhaust ports 13 and intake ports 14, of which the openings to a combustion chamber in each cylinder are opened/closed by exhaust valves 16 and intake valves 17. The exhaust and intake valves 16, 17 are driven by cams 20, 21 provided on cam shafts 18, 19, which are adapted to be rotated by the crank shaft 8 through cam chains (not shown). In the cylinder head 6 are provided ignition plugs 22 facing combustion chambers 15.

To the cylinder head 6 is connected an exhaust pipe 30 in communication with exhaust ports 13, and the exhaust pipe 30 is connected to a turbine 31 and further to a muffler 32 through a catalyst (not shown).

In addition, to the cylinder head 6 is connected an intake manifold 40 in communication with intake ports 14. The intake manifold 40 is provided with a surge tank 41, the downstream side of which is branched into four intake passages 42, which are connected to the respective cylinders. Upstream of the surge tank 41 is provided a throttle body 43, which is equipped with a throttle valve 44 for controlling the intake airflow rate. To the throttle body 43 is connected an intercooler 45, to which is connected a compressor 47 through an intake pipe 46, and the compressor 47 and the turbine 31 are driven in association with each other.

To the compressor 47 is connected an air cleaner 49 through an intake pipe 48. The intake pipe 48 is provided with a sub-intake passage 50 connecting the upstream side and the downstream side of the throttle valve 44, and in the middle of the sub-intake passage 50 are disposed a control valve 51 for controlling the intake air flow rate, and a check valve 52 downstream of the control valve 51. The upstream side 50a end of the sub-intake passage 50 is open to the intake pipe 48, and the downstream side 50b ends are open to intake ports 14, air being supplied from the upstream side of an injector 53 on the cylinder head 6.

On the downstream side from the check valve 52, the sub-intake passage 50 is branched into first branch passages 50c1 and second branch passages 50c2 in two stages, and the branched passages 50c are open to intake ports 14 in the respective cylinders through delivery passages 50b, whereby uniformity of the intake flow rate can be achieved for each cylinder, providing stability of combustion.

In addition, the downstream side ends of a sub-intake passage 50 bypassing the throttle valve 44 for air-intake are open to intake ports 14, so that intake air turbulence due to air induction during idling, especially during first idling after cold starting, facilitates mixture of air with fuel, providing stable combustion after cold starting. Further, the check valve 52 is disposed on the downstream side of the sub-intake passage 50 from the control valve 51, so that the check valve 52 allows for prevention of engine hunting due to pulsation of intake air during deceleration, and reduction of leakage of supercharged pressure.

In the embodiment of Fig. 1 and Fig. 2, on the downstream side of the intake manifold 40 from the surge tank 41, two of the four intake passages 42 on either side are bent outwardly symmetrical with respect to the center line, and the downstream ends of the sub-intake passage 50 are each open to the intake passages 42 at their outwardly bent sides where air velocity is large, so that air-intake from the intake ports 14 can be performed smoothly.

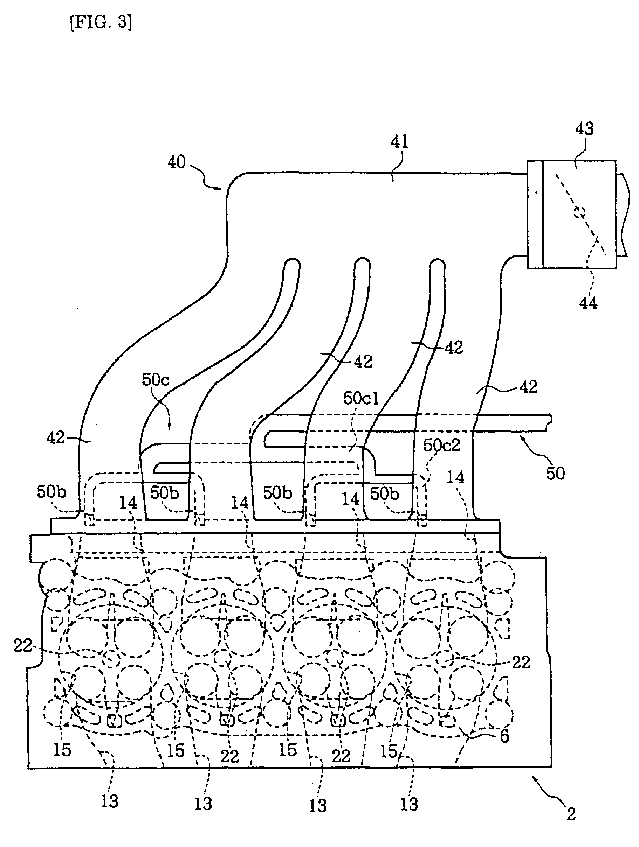

Fig. 3 is a schematic view showing the construction of another embodiment of the four-stroke cycle engine with turbocharger. In this embodiment, on the downstream side of the intake manifold 40 from the surge tank 41, all of the four intake passages 42 are bent in the same direction, and the downstream ends of the sub-intake passage 50 are each open to the intake passages 42 at their outwardly bent sides where air velocity is large, so that air-intake from the intake ports 14 can be performed smoothly.

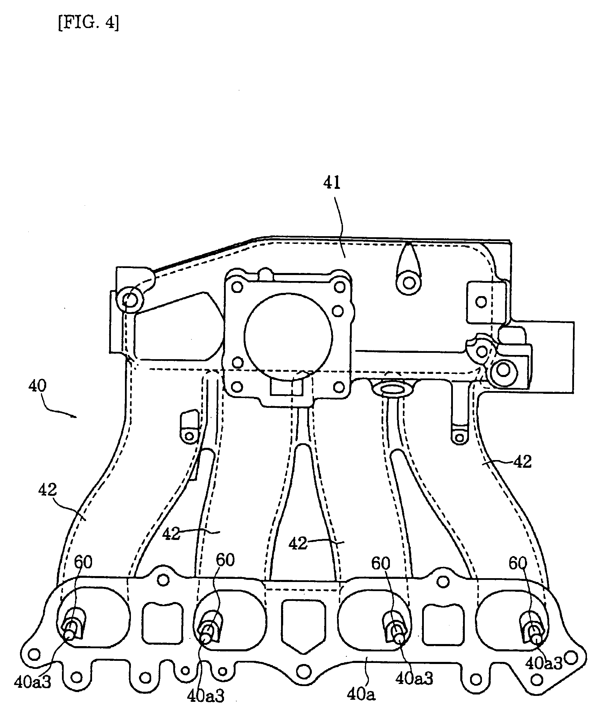

Fig. 4 through Fig. 12 show examples of the construction in which the sub-intake passage downstream of the check valve 52 is branched in two stages and the branched passages are opened to the intake ports in the respective cylinders.

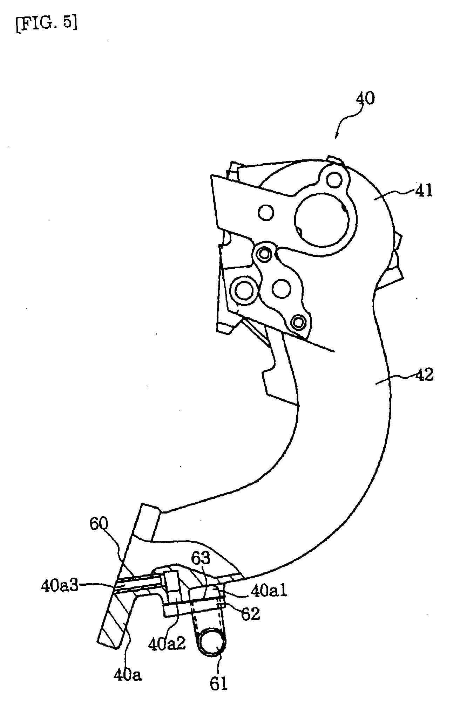

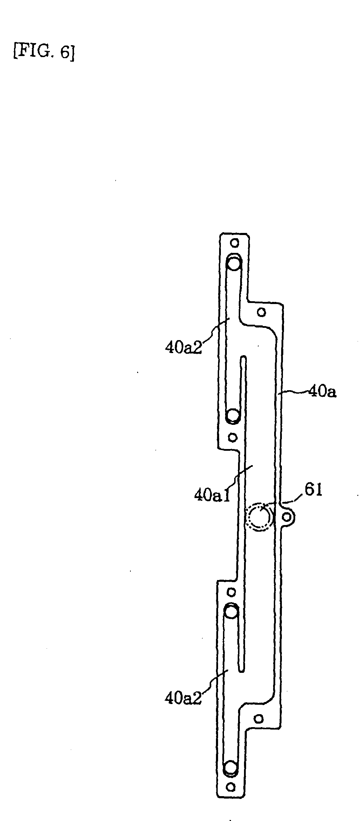

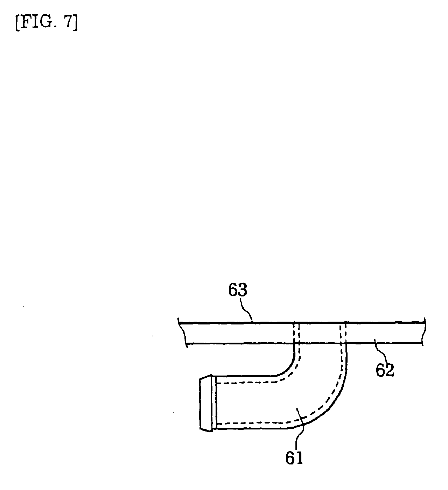

First, an embodiment of Fig. 4 through Fig. 7 will be described. Fig. 4 is a front view of an intake manifold, Fig. 5 is a partially broken-away side view of the intake manifold, Fig. 6 is a plan view of a cylinder head connection section, and Fig. 7 is a side view of a lid.

In this embodiment, in a cylinder head connection section 40a of an intake manifold 40, first head side branch paths 40a1 branched from the sub-intake passage 50 downstream of the check valve 52, second head side branch paths 40a2 branched further from the first head side branch paths 40a1 and delivery passages 40a3 having downstream openings through which air is delivered from the second head side branch paths 42a2 to intake ports of the cylinders, are formed integrally. The delivery passages 40a3 are open to the mating surface to the cylinder. The delivery passages 40a3 are in communication with the second head side branch paths 40a2, and constituted by pipes force-fitted in machined holes. The pipe may be held with a gasket against coming off.

To a cylinder head connection section 40a is attached, through a sealing member 63 of a gasket, a lid 62 having an intake air induction section 61 connected to the downstream side from the check valve 52, covering the first and second head side branch paths 40a1, 40a2. Thus, with a simple construction comprised of a cylinder head connection section 40a and a lid 62, the sub-intake passage 50 downstream of the check valve 52 is branched in two stages to be open to intake ports in the respective cylinders.

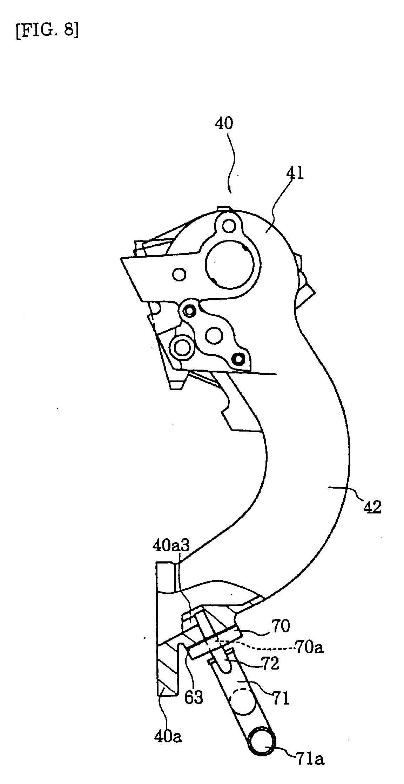

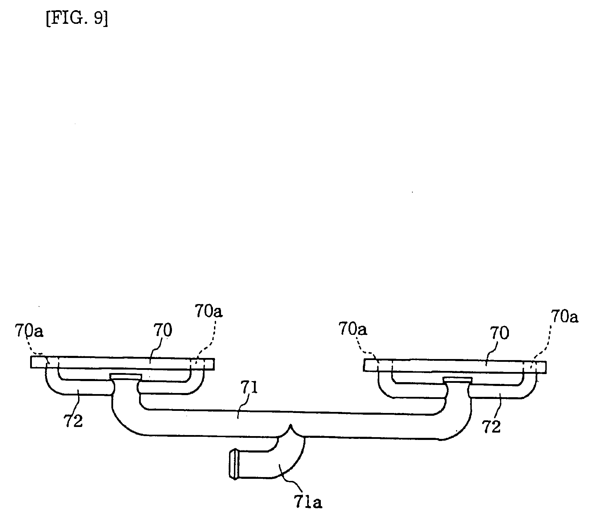

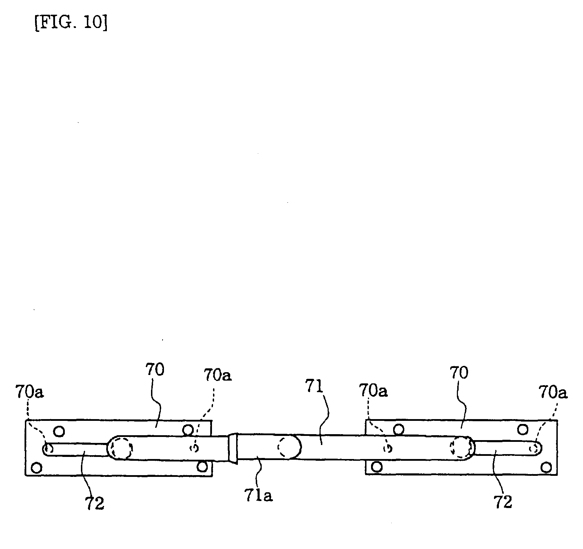

Now, an embodiment of Fig. 8 through Fig. 10 will be described. Fig. 8 is a partially broken-away side view of an intake manifold, Fig. 9 is a side view of branch piping, and Fig. 10 is a plan view of the branch piping.

In this embodiment, in cylinder head connection sections 40a of the intake manifold 40, delivery passages 40a3 having downstream openings through which air is delivered to the intake ports 14, are formed integrally. Although the delivery passages 40a3 are not open to the mating surfaces to the cylinder, it may extends to the mating surfaces for opening.

The delivery passages 40a3 are constituted by machined holes and in communication with communication holes 70a in the lids 70. The branch piping has a first branch pipe 71 with an intake induction section 71a connected to the downstream side from the check valve 52, and second branch pipes 72 branched further from the first branch pipe 71, and the second branch pipes 72 are connected to lids 70, in alignment with the communication holes 70a. The lids are attached to the cylinder head connection sections 40a through sealing members 63 of gaskets.

Thus, with a simple construction comprised of cylinder head connection sections 40a, a first branch pipe 71, second branch pipes 72 and lids 70, the sub-intake passage downstream of the check valve 52 is branched in two stages and the branched passages can be open to intake ports in the respective cylinders.

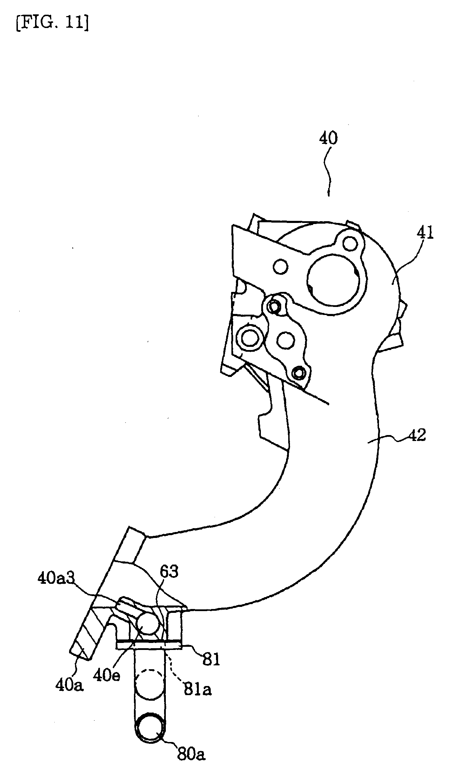

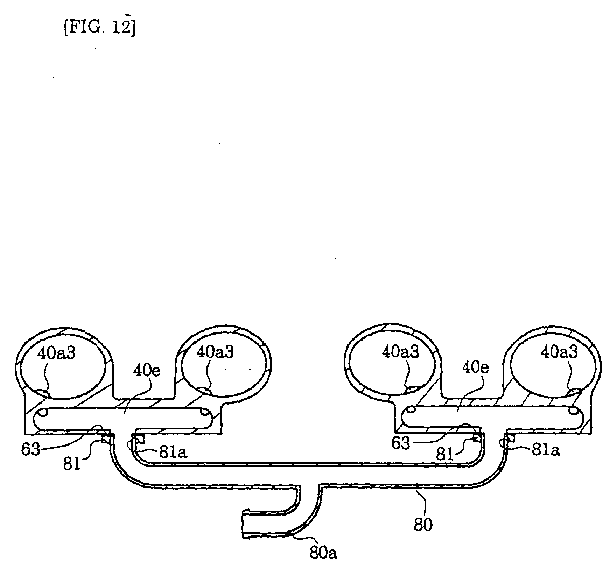

Now, an embodiment of Fig. 11 and Fig. 12 will be described. Fig. 11 is a partially broken-away side view of an intake manifold, and Fig. 12 is a sectional view along line XII-XII of Fig. 11.

In this embodiment, in cylinder head connection sections 40a of the intake manifold 40, head side branch passages 40e branched from the sub-intake passage 50 downstream of the check valve 52, and delivery passages 40a3 having downstream openings through which air is delivered from the head side branch passages 40e to intake ports of the cylinders, are formed integrally.

Further, a branch pipe 80 having an intake air induction section 80a connected to the downstream side of said sub-intake pipe from the check valve 52, is connected to lids 81 having communication holes 81a providing communication between the branch pipe 80 and the head side branch passages 40c, and the lids 81 are attached to the cylinder head connection sections 40a.

Thus, with a simple construction comprised of cylinder head connection sections 40a, a branch pipe 80 and lids 81, the sub-intake passage 50 downstream of the check valve 52 is branched in two stages and the branched passages can be open to intake ports 14 in the respective cylinders.

As described above, in the invention of claim 1, the downstream side ends of a sub-intake passage bypassing a throttle valve for air-intake are open to intake ports, so that intake air turbulence due to air induction during idling, especially during first idling after cold starting, facilitates mixture of air with fuel, providing stable combustion after cold starting. In addition, a check valve is disposed on the downstream side of the sub-intake passage from the control valve, so that the check valve allows for prevention of engine hunting due to pulsation of intake air during deceleration, and reduction of leakage of supercharged pressure.

In the invention of claim 2, uniformity of the intake airflow rate can be achieved for each cylinder, effecting stability of combustion.

In the invention of claim 3, with a simple construction comprised of a cylinder head connection section and a lid, the sub-intake passage downstream of the check valve is branched in two stages and the branched passages can be open to intake ports in the respective cylinders.

In the invention of claim 4, with a simple construction comprised of cylinder head connection sections, a first branch pipe, second branch pipes and lids, the sub-intake passage downstream of the check valve is branched in two stages and the branched passages can be open to intake ports in the respective cylinders.

In the invention of claim 5, with a simple construction comprised of cylinder head connection sections, a branch pipe and lids, the sub-intake passage downstream of the check valve is branched in two stages and the branched passages can be open to intake ports in the respective cylinders.

## Claims

1. A four-stroke cycle engine (1) having intake ports (14) openable to a combustion chamber (15) in a cylinder head (6), said intake ports (14) being connected to an intake manifold (40), said intake manifold (40) being provided with a throttle valve (44) for controlling the intake air flow rate, and having a sub-intake passage (50) for connecting the upstream and downstream sides of said throttle valve (44), and a control valve (51) disposed in said sub-intake passage (50) for controlling the intake air flow rate,
**characterized in that**
the downstream side ends of said sub-intake passage (50) are open to said intake ports (14), and a check valve (52) is disposed on the downstream side of said sub-intake passage (50) from said control valve (51).

2. The four-stroke cycle engine (1) according to claim 1, **characterized in that** an even number of and more than four cylinders are provided, said sub-intake passage (50) downstream of said check valve (51) is branched into a plurality of branch passages (50c1,50c2) a multistage fashion, and said branched passages are each open to intake ports (14) in respective cylinders.

3. The four-stroke cycle engine (1) according to claim 2, **characterized in that** in a cylinder head connection section (40a) of said intake manifold (40), first head side branch paths (40a1) branched from said sub-intake passage (50) downstream of said check valve (52), second head side branch paths (40a2) branched further from said first head side branch paths (40a1), and delivery passages (40a3) having downstream openings through which air is delivered from said second head side branch paths (40a2) to intake ports (14) of said cylinders, are formed integrally.

4. The four-stroke cycle engine (1) according to claim 3, **characterized in that** a lid (62) having an intake air induction section (61) connected to the downstream side of said sub-intake passage (50) from said check valve (51), is attached to said cylinder head connection section (40a).

5. The four-stroke cycle engine (1) according to claim 2, wherein in cylinder head connection sections (40a) of said intake manifold (40), delivery passages (40a3) having downstream openings through which air is delivered to said intake ports (14), are formed integrally.

6. The four-stroke cycle engine (1) according to claim 5, **characterized in that** first branch pipe (71) having an intake air induction section (71a) connected to the downstream side of said sub-intake passage (50) from said check valve (52), and second branch pipes (72) branched further from said first branch pipe (71), are provided; and lids (70) having communication holes (70a) in communication with said delivery passages, are connected to said second branch pipes (72), said lids (70) being attached to said cylinder head connection sections (40a).

7. The four-stroke cycle engine (1) according to claim 2, wherein in cylinder head connection sections (40a) of said intake manifold (40), head side branch passages (40e) branched from said sub-intake passage (50) downstream of said check valve (52), and delivery passages (40a3) having downstream openings through which air is delivered from said head side branch passages (40e) to intake ports (14) of said cylinders, are formed integrally.

8. The four-stroke cycle engine (1) according to claim 7, **characterized in that** a branch pipe (80) having an intake air induction section (80a) connected to the downstream side of said sub-intake passage (50) from said check valve (52), is connected to lids (81) having communication holes (81a) providing communication between said branch pipe (80) and said head side branch passages (40c), said lids (81) being attached to said cylinder head connection sections (40a).

9. The four-stroke cycle engine (1) according to at least one of the preceding claims 1 to 8, **characterized in that** to the throttle body (43) is connected an intercooler (45), to which a compressor (47) is connected through an intake pipe (46).

10. The four-stroke cycle engine (1) according to at least one of the preceding claims 1 to 9, **characterized in that** on the downstream side of the intake manifold (40) from a surge tank (41), all of the intake passages (42) are bent in the same direction, and the downstream ends of the sub-intake passages (50) are each open to the intake passages (42) at their outwardly bent sides.
